# EUROPÄISCHE PATENTSCHRIFT

(11) **EP 3 243 694 B1**
(45) Veröffentlichungstag und Bekanntmachung des Hinweises auf die Patenterteilung: **04.08.2021**
(21) Anmeldenummer: 17170567.6
(22) Anmeldetag: 11.05.2017
(51) Int. Cl.: B60N 2/015, B60N 2/01, B62D 25/20

(54) **VORRICHTUNG ZUR ANBRINGUNG EINER SITZANORDNUNG IN EINEM FAHRZEUG UND FAHRZEUG**
DEVICE FOR APPLYING A SEAT ARRANGEMENT IN A VEHICLE AND VEHICLE
PROCÉDÉ DESTINÉ AU MONTAGE D'UN SYSTÈME DE SIÈGES DANS UN VÉHICULE ET VÉHICULE

(30) Priorität: 13.05.2016 DE 102016108858
(43) Veröffentlichungstag der Anmeldung: 15.11.2017
(73) Patentinhaber: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Otten, Roth, Dobler & Partner mbB Patentanwälte

(56) Entgegenhaltungen:
- WO-A1-98/09834
- DE-A1-102006 044 757
- DE-T2- 60 315 734
- IE-A1- 980 168

## Beschreibung

### Stand der Technik

Im Fahrzeugbau ist es regelmäßig notwendig, Inneneinrichtungen wie beispielsweise eine Sitzanordnung an einem Fahrzeugboden anzubringen.

Hierfür werden üblicherweise Schraubverbindungen verwendet, um bodennahe Abschnitte der Inneneinrichtung bzw. der Sitz-Grundkonstruktion am Fahrzeugboden anschrauben zu können.

Bei Kleinbussen sind zum Beispiel sich über die Fläche des Fahrzeugbodens erstreckende plattenartige Verankerungsstrukturen einsetzbar, welche auf dem Fahrzeugboden befestigt werden, an denen dann die Sitzkonstruktion fixierbar ist.

Die WO 98/09834 A1 betrifft ein Sitzsystem für Fahrzeuge, wobei das Sitzsystem ein Führungsmittel und ein Schiebeglied aufweist.

### Aufgabe und Vorteile der Erfindung

Aufgabe der vorliegenden Erfindung ist es, die Anbringung einer Sitzanordnung in einem Fahrzeug zu verbessern, insbesondere in Hinblick auf eine wirtschaftlich und technisch vorteilhafte Ausbildung. Insbesondere soll eine Sitzanordnung in einem Fahrzeug unkompliziert und flexibel bereitgestellt werden, was die Herstellung, Montage und die Wahl der verwendeten Materialien angeht. Außerdem soll die Positionierung der Sitzanordnung am Fahrzeugboden flexibel möglich sein. Zudem sollen auch die Wärmedämmung des Fahrzeuginneren betreffende Aspekte berücksichtigt werden bzw. Maßnahmen zur Vermeidung von Kältebrücken vorteilhaft realisierbar sein.

Diese Aufgabe wird durch die unabhängigen Ansprüche gelöst.

Die abhängigen Ansprüche betreffen vorteilhafte Varianten der Erfindung.

Die Erfindung geht aus von einer Vorrichtung zur Anbringung einer Sitzanordnung in einem Fahrzeug, wobei die Vorrichtung eine oberseitig an einem Fahrzeugboden einbaubare Rahmenstruktur mit winklig zueinander ausgerichteten Rahmenabschnitten aufweist. Die Erfindung betrifft insbesondere einen Adapterrahmen bzw. einen Fahrzeug-Einbaurahmen für einen Einbau in einem Fahrzeug zur Anbringung einer Sitzanordnung im Fahrzeug.

Die Sitzanorndung kann beispielsweise ein einzelner Fahrzeugsitz oder eine Doppelsitz- oder Mehrsitzanordnung wie eine Sitzbank sein. Eine Sitzanordnung umfasst zumindest ein mechanisch vergleichsweise stabiles Sitzgestell oder ein Sitz-Grundgerippe, wobei zusätzlich Sitzpolster und andere Einrichtungen beispielsweise zur Verstellung des Sitzes und Sicherheitssysteme zur Sicherung einer in dem Fahrzeugsitz sitzenden Person vorhanden sind.

Am Sitzgestell kann gegebenenfalls ein daran unterseitig angeordneter Unterbau vorhanden sein, über welchen die Sitzanordnung mit der Vorrichtung bzw. der Rahmenstruktur verbunden und damit am Fahrzeugboden fixierbar ist.

Im eingebauten Zustand der Rahmenstruktur im Fahrzeug liegt die Rahmenstruktur flach auf dem Fahrzeugboden bzw. ist eine von der Rahmenstruktur aufgespannte Rahmenebenen parallel zum Fahrzeugboden ausgerichtet. Die Rahmenstruktur ist dabei entsprechend der Höhe von Rahmenabschnitten erhaben zu einer Oberseite des Fahrzeugbodens.

Die Rahmenstruktur umfasst einen Grundrahmen zur Fixierung der Rahmenstruktur an dem Fahrzeugboden umfasst, wobei der Grundrahmen mit Befestigungsmitteln derart vorbereitet ausgebildet ist, dass der Grundrahmen an im Fahrzeug vorgegebenen Befestigungspunkten befestigbar ist.

Ein grundlegender Aspekt der Erfindung ist darin zu sehen, dass die Rahmenstruktur einen Grundrahmen zur Fixierung der Rahmenstruktur an dem Fahrzeugboden umfasst, wobei innerhalb eines vom Grundrahmen umrandeten Rahmenbereichs zwei oder mehr als zwei zueinander parallel ausgerichtete Schienenführungen aufgenommen sind, welche zur Befestigung einer Sitzanorndung an wenigstens zwei Schienenführungen dienen, wobei die Schienenführungen ausgebildet sind, dass die Sitzanordnung in Längsrichtung der jeweiligen Schienenführung stufenlos verstellbar und an unterschiedlichen Abschnitten der Schienenführungen befestigbar ist.

An den wenigstens zwei am Grundrahmen in ihrer Position und ihrem gegenseitigem Abstand befestigten Schienenführungen kann die Sitzanordnung in Längsrichtung der Schienenführungen an beliebigen Stellen angebracht werden. Die Stellen sind auswählbar bei der Montage des Fahrzeugsitzes vorzugsweise über die gesamte Länge der Schienenführungen. Über die Länge der Schienenführungen betrachtet wird für die Anbringung einer Sitzanordnung nur ein Bruchteil der Gesamtlänge der Schienenführungen belegt z. B. ca. 5-10 % der Gesamtlänge.

Damit kann in Längsrichtungen der Schienenführungen die Position der Sitzanorndung relativ zur Rahmenstruktur und damit relativ zum Fahrzeuginneren vorzugsweise stufenlos versetzbar bestimmt werden. Eine Sitzanordnung kann in Längs- bzw. Fahrrichtung des Fahrzeugs zum Beispiel in einer ersten, zweiten oder dritten Sitzreihe befestigt werden, wenn die Schienenführungen mit ihrer Längsrichtung in Fahrrichtung verlaufen.

Wenn an der im Fahrzeug montierten Rahmenstruktur die Schienenführungen mit ihrer Längsrichtung quer zur Fahrrichtung verlaufen, kann die Sitzanordnung zum Beispiel auf der rechten Seite oder in einem mittleren Bereich oder auf der linken Seite im Fahrzeuginneren befestiget werden.

Vorzugsweise sind sämtliche Schienenführungen der Vorrichtung identisch aufgebaut. Damit können vorteilhafterweise sämtliche Schienenführungen eines Grundrahmens aus im Lieferzustand nach der Herstellung identischen Schienenprofilen beispielsweise durch Ablängen bzw. Kürzen eines Schienenprofils hergestellt werden bzw. auf eine individuelle bzw. gewünschte Länge gebracht werden. Entsprechende mehrere gleiche Verbindungsmittel an der Sitzanordnung passen demgemäß für sämtliche Schienenführungen gleichermaßen.

Der Grundrahmen ist vorzugsweise als Adapterrahmen ausgebildet. Nachfolgend wird wahlweise der Begriff Adapterrahmen und/oder der Begriff Grundrahmen gleichbedeutend benutzt.

Mit dem Adapterrahmen ist es vorteilhaft möglich, den Adapterrahmen bei beliebigen Fahrzeugtypen an den jeweiligen originalen Befestigungspunkten bzw. adapterartig einzubauen. Hierzu sind die Befestigungsmittel am Adapterrahmen vorhanden, die stabil am Adapterrahmen jeweils abgestimmt auf die existierenden Befestigungspunkte im betreffenden Fahrzeug vorhanden sind.

Die Befestigungsmittel sind am Grundrahmen vorzugsweise daran integral vorhanden und/oder beispielsweise als Anbauten wie einem Flach-, Form- und/oder Hohlprofil ausgestaltet oder als vorbereitete Schraub- oder Stecköffnungen und dergleichen.

Die in der Regel mehreren originalen Befestigungspunkte in einem Fahrzeug ermöglichen die stabile Anbringung einer Sitzanordnung an der vom Fahrzeughersteller vorgesehenen Stelle im Fahrzeug. Die originalen Befestigungspunkte sind fahrzeugseitig insbesondere z. B. zur Ausbildung einer Schraubverbindung zwischen einer Fahrzeug-Sitzanordnung und dem Fahrzeug bzw. dem Fahrzeugboden bereitgestellt.

Mit den originalen Befestigungspunkten, die bezogen auf die Fahrzeugstatik an besonders geeigneten bzw. steifen und mechanisch stabilen Punkten vorgegeben sind, ist es jedoch nicht unmittelbar möglich, die Sitzanordnung flexibel bzw. an anderen gewünschten Stellen im Fahrzeug stabil zu montieren.

Mit dem erfindungsgemäßen Adapterrahmen, der mit den Befestigungsmitteln genau auf die originalen Befestigungspunkte adaptiert ist, kann eine Sitzanordnung flexibel im Fahrzeuginneren positioniert werden. Die Befestigung des Adapterrahmens an den originalen Befestigungspunkten erfolgt vorzugsweise durch Anschrauben bzw. mit Schraubmitteln zur Ausbildung einer Schraubverbindung.

Neben der Befestigung des Grundrahmens an den originalen Befestigungspunkten kann der Grundrahmen gegebenenfalls bzw. optional über weitere Befestigungspunkte am Fahrzeugboden bzw. an besonders geeigneten stabilen Fahrzeugabschnitten wie einem Fahrzeugrahmen befestigt werden. Die weiteren Befestigungspunkte können vorteilhaft individuell gewählt werden, vorzugsweise durch eine Schraubverbindung realisiert.

Vorteilhafterweise kann man mit der Erfindung auf ein zusätzliches Verkleben von Befestigungs-Strukturen, wie z. B. Schienen, im Fahrzeug verzichtet werden. Dies ist bisher notwendig, um die Schienen, die nicht an den originalen Befestigungspunkten fixiert sind, ausreichend stabil befestigen zu können.

Ein zusätzliches Verkleben ist nachteilig, da dies nur durch Fachbetriebe ausführbar ist und hierfür ein hoher Zeitaufwand zum Trocknen der Klebverbindung verbunden ist. Diese Nachteile entfallen bei der erfindungsgemäßen Vorrichtung.

Mit dem Adapterrahmen können Sitzanordnungen an einer Vielzahl von beliebigen Stellen auf einer vom Grundrahmen umrahmten Fläche im Fahrzeug und damit flexibel positioniert werden.

Am Adapterrahmen sind die vorbereiteten Befestigungsmittel derart ausgebildet, dass der Adapterrahmen immer passend an den im Originalzustand des Fahrzeugs vorhandenen originalen Befestigungsstellen am Fahrzeugboden mit den Befestigungsmitteln befestigbar ist. Die Befestigung erfolgt vorzugsweise zumindest über die vorgegebenen Befestigungspunkte im Fahrzeug.

Der Adapter- bzw. Grundrahmen weist die Befestigungsmittel demgemäß an den Stellen auf, welche zu den original vom Fahrzeughersteller vorgegebenen Befestigungspunkten des jeweiligen Fahrzeugs passen. Dies ist bezogen auf den Einbauzustand des Adapter- bzw. Grundrahmen im Fahrzeug. Die originalen Befestigungspunkte im Fahrzeug sind bevorzugt an einer mechanisch bzw. statisch und dynamisch hoch belastbaren Struktur des Fahrzeugs vorhanden. Eine hoch belastbare Struktur des Fahrzeugs ist beispielsweise eine Rahmen- oder Tragestruktur des Fahrzeugs bzw. des Fahrgestells, vorzugsweise im Bereich des Fahrzeugbodens z. B. am oder unterhalb des Fahrzeugbodens. Der Adapter- bzw. Grundrahmen ist damit passend anbringbar und insbesondere mit den Befestigungsmitteln vergleichsweise effektiv, sicher und besonders stabil mechanisch koppelbar mit der Tragestruktur des Fahrzeugs. Bei einem Fahrzeug sind in der Regel an besonders geeigneten bzw. stabilen Stellen insbesondere von tragenden Teilen eines Fahrzeuggestells die vorgegebenen Befestigungspunkte vorhanden. Dadurch ist die Anbindung der Rahmenstruktur über den adapter- bzw. Grundrahmen an den Befestigungspunkten besonders vorteilhaft. Die vorgegebenen Befestigungspunkte liegen zum Beispiel im Bereich einer Verstrebungsstruktur des Fahrzeug-Untergestells. Die Verstrebungsstruktur kann z. B. unmittelbar unterseitig an den Bodenbereich des Fahrzeugs angrenzen, was die Befestigung erleichtert.

Der Grundrahmen kann im Lieferzustand als ein Bauteil ausgebildet sein oder aus mehreren separaten Teilrahmen bestehen, welche später z. B. im Fahrzeug dann zum fertigen Grundrahmen zusammengebaut werden.

Ein Aspekt liegt darin,
dass die Rahmenstruktur einen Grundrahmen zur Fixierung der Rahmenstruktur an dem Fahrzeugboden umfasst, wobei innerhalb eines vom Grundrahmen umrandeten Rahmenbereichs zwei oder mehr als zwei zueinander parallel ausgerichtete Schienenführungen aufgenommen sind, welche zur Befestigung einer Sitzanordnung an wenigstens zwei Schienenführungen dienen.

Die Schienenführungen in einem vorbereiteten Grundrahmen ermöglicht eine vorteilhafte Herstellung und Montage der Vorrichtung.

Die Erfindung ist gegenüber bisherigen Anordnungen mit Schienen in Fahrzeugen vorteilhaft. Bislang werden Schienen auf dem Fahrzeugboden montiert und müssen in der Regel zusätzlich verklebt werden. Dies ist nachteilig. Die Verklebung muss von einer Fachwerkstatt ausgeführt werden. Dies ist teuer und benötigt vergleichsweise viel Zeit zum Abtrocknen der Klebverbindung.

Auch ist es erfindungsgemäß, wenn zumindest eine Schienenführung zu einer weiteren Schienenführung am Grundrahmen versetzbar gelagert ist, um einen Abstand der Schienenführungen zueinander veränderbar vorzugeben. Der Abstand bezieht sich auf einen Abstand, der sich quer zur Längserstreckung der beiden Schienenführungen ergibt. Der Abstand ist demgemäß innerhalb des umrandeten Rahmenbereichs zu bestimmen. Die Schienenführung besteht bevorzugt aus einem starren länglichen Bauteil z. B. aus einem Metallmaterial, vorzugsweise aus einem Stahl- oder Aluminiummaterial, womit bezüglich der Vorrichtung eine flexible Materialauswahl für die Komponenten der Vorrichtung ermöglicht ist.

Die freie Materialwahl ermöglicht vorteilhafte auch ein effektives Material-Recycling bzw. eine vorteilhafte Verschrottung des Fahrzeugs. Insbesondere wenn der Fahrzeugboden und die Schienenführung aus dem gleichen Material zum Beispiel aus Stahl bestehen.

Bei bisherigen Systemen mit Alu-Schienenführungen und einem Fahrzeugboden aus Stahl ist die Trennung der verschiedenen Metallmaterialien nur aufwändig bzw. erschwert möglich.

Eine Sitzanordnung wie ein Einfach- oder Mehrfach-Personensitz lässt sich über mindestens zwei an der Sitzanordnung vorbereitet vorhandene Verbindungsbereiche, die auf die Schienenführungen abgestimmt sind, an der im Fahrzeug fest verankerten Rahmenstruktur befestigen. Die Rahmenstruktur umfasst demgemäß zumindest den Grundrahmen und die Schienenführungen.

Mit den abstandsveränderlich einstellbaren Schienenführungen, können die Schienenführungen exakt so im Abstand zueinander versetzt werden und in der exakt eingestellten Abstandsposition jeweils an der Rahmenstruktur fixiert werden, dass die jeweilige Sitzanordnung passend an der Rahmenstruktur bzw. an den Schienenführungen befestigbar ist. In der Regel ist an einer Sitzanordnung je nach Art und Größe der Sitzanordnung eine Verbindungsstruktur vorgegeben vorhanden, so dass die Schienenführungen auf die jeweilige Verbindungsstruktur der Sitzanordnung angepasst werden muss. Da vor dem Einbau der Vorrichtung bzw. der Rahmenstruktur am Fahrzeugboden regelmäßig nicht bekannt ist, welche Sitzanordnung daran befestigt werden soll, ist es vorteilhaft, wenn bei der Rahmenstruktur der erfindungsgemäßen Vorrichtung im eingebauten Zustand der Rahmenstruktur im Fahrzeug die Schienenführungen in ihrem Abstand zueinander flexibel, problemlos und positionsgenau einstellbar sind.

Vorzugsweise sind zur versetzbaren Lagerung der jeweiligen Schienenführung bzw. zur Verstellung der jeweiligen Schienenführung an der Rahmenstruktur Verstellmittel vorhanden. Vorzugsweise sind die Verstellmittel an gegenüberliegenden Endabschnitten einer Schienenführung und entlang des Grundrahmens vorhanden. Damit kann eine Schienenführung mit beiden Endabschnitten geführt entlang des Grundrahmens bzw. einer Randstruktur des Grundrahmens bzw. einer Grundrahmen-Umrandung verstellt vorzugsweise verschoben oder versetzt werden. Die beiden gegenüberliegenden Endabschnitte der Schienenführung sind dabei in lagerndem Kontakt mit gegenüberliegenden Stellen an der Randstruktur des Grundrahmens. Die Verstellmittel können zum Beispiel eine Führungsnut entlang der Randstruktur des Grundrahmens aufweisen und einen Schlitten an dem jeweiligen Ende der Schienenführung, wobei der Schlitten passend gehalten in der Führungsnut hin- und herverschieblich und fixierbar ist.

Vorzugsweise sind die Schienenführungen stufenlos verschieblich am Grundrahmen gelagert bzw. entlang der längsseitigen und/oder der breitseitigen Außenränder der Teilrahmen verschieblich und fixierbar in beliebig vorgebbaren Positionen.

Vorzugsweise sind lösbare Fixierungsmittel vorgesehen, welche derart gestaltet sind, dass eine Schienenführung entlang der Randstruktur des Grundrahmens in einer beliebigen Position fixierbar bzw. arretierbar ist, so dass bei eingerichteter Fixierung eine Verstellung bzw. Verschiebung der Schienenführung relativ zum Grundrahmen unterbunden ist. Die Fixierungsmittel können unter anderem lösbare Klemm- oder Rast- oder Schraubmittel wie z. B. Arretierschrauben oder Arretierstifte und dergleichen umfassen.

So kann eine Sitzanordnung oder alternativ können mehrere Sitzanordnungen innerhalb des vom Grundrahmen umrahmten Bereichs positioniert werden. Dieser Bereich kann der gesamten Fläche des Fahrzeugbodens entsprechen oder einem Teil davon.

Vorzugsweise sind die Längsrichtungen der Schienenführungen bzw. deren Führungsbahnen parallel zu Außenseiten des Grundrahmens ausgerichtet bzw. parallel zur Längs- und/oder Breitseite des Grundrahmens. Es ist aber auch einrichtbar, dass eine Längsrichtung der Schienenführungen zu Außenseiten des Grundrahmens winklig bzw. schräg steht.

Im befestigten Zustand der Sitzanordnung werden auf die Sitzanordnung wirkende Kräfte und Momente über die Verbindung zur Rahmenstruktur in die Schienenführungen bzw. in die Rahmenstruktur eingeleitet und weiter abgeführt in den Fahrzeugboden bzw. in die tragenden Teile des Fahrzeugs.

Aus mechanischen Gründen bzw. aus Stabilitätsgründen ist die Rahmenstruktur vorteilhaft über eine Vielzahl von Befestigungspunkten bzw. Befestigungsbereichen am Fahrzeugboden befestigt, womit eine stabile Anbindung am Fahrzeugboden über eine entsprechende Vielzahl von unterschiedlichen Punkten erfolgt. Bei in einem Kraftfluss liegenden Abschnitten des Grundrahmens, bezogen auf eine Belastung durch eine in der Sitzanordnung sitzende Person, können wirkende Maximalbelastungen bzw. Belastungsspitzen im Belastungsfall wie einem Unfallereignis des Fahrzeugs verringert werden, so dass ein Versagen von Bauteilabschnitten am Grundrahmen und/oder dem Fahrzeugboden ausgeschlossen werden kann.

Mit der Erfindung ist es vorteilhaft möglich, einen parallelen Abstand von zwei benachbarten Schienenführungen so einzustellen, dass die Schienenführungen exakt passend sind zu einer Verbindungsstruktur der Sitzanordnung zur Anbringung der Sitzanordnung an dem Grundrahmen.

Gemäß der Erfindung weist der Grundrahmen wenigstens zwei Teilrahmen auf, wobei ein Teilrahmen einen längsseitigen Außenrand und einen breitseitigen Außenrand aufweist, und die Teilrahmen derart abgestimmt sind, dass ein Außenrand eines Teilrahmens an einem Außenrand eines anderen Teilrahmens angrenzt und die beiden aneinander angrenzenden Außenränder miteinander verbunden sind, um den Grundrahmen im Einbauzustand zu bilden. Die

Teilrahmen sind für sich in der Grundfläche vorzugsweise jeweils zumindest im Wesentlichen viereckig insbesondere rechteckig. Die wenigstens zwei Teilrahmen sind bevorzugt identisch. Vorzugsweise sind die beiden Teilrahmen mit jeweils einem längsseitigen Außenrand miteinander verbunden. Eine Verbindung eines breitseitigen Außenrands eines Teilrahmens mit einem längsseitigen Außenrand eines anderen Teilrahmens ist alternativ auch vorteilhaft.

Es ist außerdem bevorzugt, dass der Grundrahmen einen geschlossenen Außenrand bereitstellt, vorzugsweise mit vier Randabschnitten, welche zwei gegenüberliegende parallele erste Randabschnitte und zwei gegenüberliegende parallele zweite Randabschnitte umfassen. Die ersten Randabschnitte sind vorzugsweise rechtwinklig zu den zweiten Randabschnitten. Die vier Randabschnitte weisen jeweils eine Unterseite auf, die vorzugsweise auf einer gemeinsamen Ebene liegen bzw. eine Ebene aufspannen.

Die Teilrahmen sind jeweils vorzugsweise aus genau vier Profilen gebildet, zwei die Längsseite und zwei die Breitseite des Teilrahmens bildenden Profile, wobei jeweils zwei Einzelprofile miteinander verbunden sind. An den Verbindungsstellen der verbundenen vier Profile sind vier Eckbereiche des Teilrahmens gebildet. Die Teilrahmen sind gegenüber anderen vielteiligen Rahmenstrukturen aufgrund eines vergleichsweise geringen Materieleisatzes und herstellungstechnisch vorteilhaft.

Mit der erfindungsgemäßen Vorrichtung lassen sich unterschiedliche Vorteile erzielen.

Zunächst sind die Teilrahmen aufeinander abgestimmt aufgebaut, so dass der Grundrahmen wahlweise aus zwei oder mehr vorproduzierten Teilrahmen problemlos am Ort des Einbaus bzw. im Fahrzeug fertiggestellt werden kann.

Vorteilhafterweise ist auch die Herstellung, das Handling und/oder der Transport der mehreren Teilrahmen leichter möglich, als dies bei dem insgesamt größeren aus zwei oder mehr zusammengebauten Teilrahmen bestehenden und damit sperrigeren und schwereren fertigen Grundrahmen der Fall ist.

Weiter können die vorproduzierten Teilrahmen, da sie aufeinander abgestimmt sind, mit wenigen einfachen Arbeitsschritten zum fertigen Grundrahmen fertigproduziert werden, zum Beispiel durch Schweißen, Kleben oder Zusammenschrauben und dergleichen insbesondere an den Randabschnitten.

Des Weiteren kann mit geringster Modellanzahl vorzugsweise mit genau einer Grundform für die Teilrahmen eine Mehrzahl von unterschiedlichen Grundrahmen hergestellt werden, was die Größe und/oder die Form bzw. Länge und Breite der Grundrahmen angeht.

Der Grundrahmen ist im zusammengebauten Zustand aus den wenigstens zwei Teilrahmen an Innenabmessungen eines Fahrzeugbodens abgestimmt. Der Grundrahmen erstreckt sich bevorzugt über eine im Wesentlichen vollständige Innenraum-Nutzfläche des Fahrzeugbodens, die zur Anbringung einer Sitzanordnung in Frage kommt. Damit lässt sich vorteilhafterweise über wesentliche Abschnitte am Fahrzeugboden eine Fahrzeuginneneinrichtung beziehungsweise eine Sitzanordnung für ein Fahrzeug positionieren.

Werden wenige bzw. zum Beispiel zwei oder drei in der Grundform unterschiedliche aber aufeinander abgestimmte Teilrahmen bereitgestellt, kann die Zahl der möglichen Varianten des fertiggestellten Grundrahmen, was dessen Größe bzw. Form angeht, weiter erhöht werden. Damit lässt sich für jeden Einsatzzweck bzw. für die Größe und Form des jeweiligen Fahrzeugbodens bzw. für jeden Fahrzeugtyp der passende Grundrahmen individuell und unkompliziert herstellen.

Vorzugsweise sind die Teilrahmen in ihrer Grundkonstruktion identisch bevorzugt rechteckförmig im Grundriss. Besteht der rechteckige Teilrahmen aus zwei kurzen Randabschnitten, welche die Breite des Rechteckrahmens bilden, und aus zwei langen Randabschnitten, welche die Länge des Rechteckrahmens bilden, wird eine freie Öffnung des Teilrahmens umrandet. Vorzugsweise sind die Rahmenabschnitte alle untereinander identisch im Aufbau bzw. unterscheiden sich lediglich in der Länge.

In der Regel sind innerhalb eines Teilrahmens weitere Elemente der Rahmenstruktur nachträglich einbringbar oder bereits mit der Herstellung des Teilrahmens vorgesehen. Die Anbindung der erfindungsgemäßen Vorrichtung am Fahrzeugboden erfolgt vorzugsweise allein oder im Wesentlichen über den Grundrahmen.

Nach einer bevorzugten Variante ist eine Schienenführung aus einem Bauteil bzw. aus einem zusammenhängenden länglichen Profilelement gebildet, zum Beispiel aus einem Stahlmaterial, vorzugsweise als ein Hohlprofil wie einem Rohrprofil beziehungsweise Vierkant-Hohlprofil. Das Hohlprofil weist eine vorzugsweise durchgehende Führungskontur außen und/oder innen bzw. ist z. B. auf an einer oberseitigen Längsseite geschlitzt bzw. offen, vorzugsweise durchgehend geschlitzt. Das Hohlprofil weist in Längsrichtung ein bevorzugt durchgehendes bzw. materialfreies Hohlvolumen auf.

Eine vorteilhafte Ausgestaltung der Erfindung zeichnet sich dadurch aus, dass in unmittelbarer Nähe einer Schienenführung ein Strebenelement vorhanden ist, das entlang der Schienenführung verläuft, wobei das Strebenelement an der Rahmenstruktur befestigt ist z. B. an gegenüberliegende Enden des Strebenelements. Das Strebenelement ist z. B ein starres längliches Bauteil, das zwischen zwei Stellen der Rahmenstruktur mit dieser bzw. dem Grundrahmen direkt und/oder über die Schienenführung verbunden ist. Das Strebenelement ist vorzugsweise über die gesamte Länge der Schienenführung neben der Schienenführung bzw. benachbart vorhanden. Das Strebenelement ist z. B. verbunden oder nicht verbunden mit der Schienenführung. Das Strebenelement kann mit der Schienenführung im verbundenen oder unverbundenen berührenden Kontakt sein.

Mit dem Strebenelement, das vorzugsweise aus einem Metallmaterial besteht, ist eine besonders stabile und mechanisch belastbare Anordnung im Bereich der Schienenführungen realisiert. An einer Schienenführung ist vorzugsweise an beiden Seiten jeweils ein Strebenelement vorgesehen, so dass eine Schienenführung zwischen zwei Strebenelementen stabilisiert vorhanden ist. Zwischen zwei benachbarten Schienenführungen kann genau ein Strebenelement vorhanden sein oder es sind zwei Strebenelemente bzw. für die jeweilige Seite der beiden Schienenführungen jeweils ein eigenes Strebenelement vorhanden.

Für eine größere Stabilität der Vorrichtung kann ein Strebenelement über zumindest eine Teillänge oder über mehrere einzelne Stellen mit der benachbarten Schienenführung verbunden sein.

Mit den Strebenelementen wird vorteilhaft eine höhere Stabilität insbesondere gezielt für die Verbindung der Sitzanordnung mit der Rahmenstruktur bzw. mit den Schienenführungen erreicht.

Das Strebenelement ist vorzugsweise über die Rahmenstruktur bzw. den Grundrahmen an dem Fahrzeugboden fixiert z. B. verschraubt, so dass eine direkte Verbindung mit dem Fahrzeugboden nicht notwendig ist. Vorzugsweise liegt im Einbauzustand der Vorrichtung im Fahrzeug das Strebenelement unterseitig zumindest abschnittsweise oder komplett abstützend auf dem Fahrzeugboden auf.

Grundsätzlich ist es vorteilhaft, wenn zumindest die überwiegenden oder sämtliche Abschnitte der Vorrichtung, also insbesondere des Grundrahmens, der Schienenführungen und der Strebenelemente mit ihrer jeweiligen Unterseite auf dem Fahrzeugboden abstützend aufliegen, vorzugsweise vollflächig oder über einzelne Stellen der jeweiligen Unterseiten.

Alternativ kann es vorteilhaft sein, dass beim im Fahrzeug montierten Zustand der Vorrichtung gezielt bestimmte Abschnitte der Unterseite der Vorrichtung abstützend auf dem Fahrzeugboden aufliegen vorzugsweise in Bereichen, die fahrzeugseitig konstruktionsbedingt mechanisch besonders belastbar sind, und andere Unterseiten-Abschnitte der Vorrichtung vom Fahrzeugboden geringfügig z. B. im Millimeterbereich von der Oberseite des Fahrzeugbodens nach oben beabstandet sind.

Gegebenenfalls kann eine vergleichsweise dünne Zwischenlage zwischen der Oberseite des Fahrzeugbodens und der Unterseite der Vorrichtung vorhanden sein, was aber auch als ein Aufliegen der Vorrichtung auf dem Fahrzeugboden zu verstehen ist. Die Zwischenlage kann z. B. ein dünnes flexibles oder festes Element wie ein Gewebe oder eine Folie oder dergleichen sein. Die Zwischenlage kann isolierende, wärme- und/oder geräuschdämpfende Eigenschaften aufweisen.

Es ist auch von Vorteil, dass eine Schienenführung winklig zu einer anderen Schienenführung ausgerichtet ist. Vorzugsweise sind zumindest zwei Schienenführungen parallel und zwei weiteren Schienenführungen winklig zu den ersten beiden Schienenführungen und zueinander ebenfalls parallel ausgerichtet. Vorzugsweise sind z. B. sämtliche Schienenführungen parallel zu den längsseitigen Außenseiten der Teilrahmen bzw. des Grundrahmens ausgerichtet. Vorzugsweise sind in einem Teilrahmen zumindest zwei insbesondere genau zwei Schienenführungen vorhanden. Die Schienenführungen laufen vorzugsweise in Längsrichtung des Grundrahmens bzw. in Längsrichtung eines Teilrahmens, was im eingebauten Zustand in der Regel in Fahrrichtung des Fahrzeugs ist.

Es ist überdies von Vorteil, dass rechtwinklig zueinander ausgerichtete Schienenführungen vorhanden sind. Vorzugsweise umfassen die Schienenführungen zumindest eine Schienenführung bevorzugt zwei oder mehr Schienenführungen in Längsrichtungen eines Teil- bzw. Grundrahmens und zumindest eine Schienenführung bevorzugt zwei oder mehr Schienenführungen in Querrichtung eines Teil- bzw. Grundrahmens. Die Schienenführungen weisen vorzugsweise parallel zu rechtwinklig stehenden Außenseiten des Grundrahmens auf. Die Längs- wie auch die Quer-Schienenführungen dienen vorzugsweise gleichartig zur Anbringung einer Sitzanordnung am Grundrahmen bzw. der Vorrichtung.

Somit kann an einer Vielzahl von unterschiedlichen Stellen innerhalb der vom Grundrahmen aufgespannten Fläche die Sitzanordnung positioniert werden. Vorzugsweise können an einer Vorrichtung mehrere Sitzanordnungen befestigt werden.

Die Quer-Schienenführungen können fest positioniert sein oder ebenfalls in ihrem Abstand zueinander verstellt werden relativ zur Rahmenstruktur und in einer Verstellposition an der Rahmenstruktur fixiert werden. Die Quer-Schienenführungen dienen gleichermaßen zur festen Anbringung einer Sitzanordnung an der Vorrichtung.

Es ist auch möglich, dass in unmittelbarer Nähe der Quer-Schienenführungen ein Strebenelement vorhanden ist, das entlang der Quer-Schienenführung verläuft, wobei die Strebenelemente an der Rahmenstruktur befestigt sind.

Weiter ist es bevorzugt, dass Längs-Strebenelemente, die parallel zur Längsrichtung der Längs-Schienenführungen verlaufen, und/oder Quer-Strebenelemente, die quer zur Längsrichtung der Längs-Schienenführungen verlaufen, vorhanden sind. Die Quer-Strebenelemente können unabhängig davon vorgesehen sein, ob Quer-Schienenführungen vorhanden sind oder nicht. Mit den Quer-Strebenelementen erfolgt eine Versteifung der Rahmenstruktur.

Zur weiteren Stabilisierung der Vorrichtung bzw. der Rahmenstruktur sind Strebenelemente möglich, welche nicht in der unmittelbaren Nähe der Schienenführungen verlaufen sondern mit Abstand dazu.

Insgesamt kann die Rahmenstruktur vorteilhaft in der Art einer Fachwerkstruktur bereitgestellt werden, wobei neben den Längs- und/oder Quer-Abschnitten der Teilrahmen, Abschnitte der Längs-Schienenführungen und/oder der Quer-Schienenführungen und/oder die Längs- bzw. Querstreben zur Bildung der Fachwerkstruktur beitragen.

Eine weitere vorteilhafte Variante der Erfindung ist dadurch gekennzeichnet, dass die Schienenführungen an einer Oberseite der Rahmenstruktur sichtbar vorhanden ist. Insbesondere sind die Oberseiten der Schienenführungen mit einer Führungsbahn und/oder einem Längsschlitz frei sichtbar und zugänglich. Damit ist im eingebauten Zustand der Vorrichtung im Fahrzeug deutlich erkennbar, wo die Schienenführungen verlaufen. Dadurch sind sämtliche möglichen Anbringstellen für die Sitzanordnung für die Montage der Sitzanordnung unmittelbar sichtbar und nutzbar.

Andere Oberseitenbereiche der Rahmenstruktur, die zwischen bzw. neben den Schienenführungen liegen, können z. B. von einer Abdeckung nach oben hin verdeckt sein. In der Regel ist im gebrauchsfertigen Fahrzeug eine Abdeckung der Vorrichtung einheitlich vorhanden.

Vorzugsweise weist jede Schienenführung oberseitig eine Führungsbahn und/oder einen Schlitz auf, der vorzugsweise nicht unterbrochen bzw. durchgehend ist. Der Schlitz dient zur Aufnahme von Verbindungstellen der Sitzanordnung. Der Schlitz bildet vorzugsweise eine Hinterschneidungs- oder Verankerungskontur in der Schienenführung insbesondere im Inneren des Hohlvolumens.

Auch ist es vorteilhaft, dass der Grundrahmen aus einem Stahlwerkstoff gebildet ist bzw. die Teilrahmen aus einem Stahlwerkstoff bestehen.

Der Grundrahmen aus Stahl ist wirtschaftlich und technisch vorteilhaft. Bisher vorhandene Abschnitte im Bodenbereich von Fahrzeugen zum Beispiel Bodenplatten, an welchen Sitzanordnungen angeordnet werden, sind z. B. aus einem Aluminiummaterial. Nachteilig ist dabei, dass Aluminium vergleichsweise weich ist und eine erhöhte Kältebrücken-Wirkung gegenüber Stahl aufweist.

Vorzugsweise sind die Schienenführungen aus einem Metallmaterial bzw. ebenfalls aus einem Stahlwerkstoff. Alternativ oder bevorzugt sind die Schienenführungen aus einem anderen Metallmaterial zum Beispiel aus einem Leichtmetall bzw. vorzugsweise auf Basis eines Aluminiumwerkstoffes.

Weiter ist es von Vorteil, dass die Rahmenstruktur ein Hohlprofil umfasst. Vorzugsweise sind die winklig zueinander ausgerichteten Rahmenabschnitten und/oder der Grundrahmen bzw. die Teilrahmen zumindest teilweise bevorzugt vollständig aus Hohlprofilen aufgebaut. Dies ist im Hinblick auf eine hohe Stabilität bei vergleichsweise geringem Materialeinsatz bzw. Gewicht vorteilhaft. Die Hohlräume der Hohlprofile können materialfrei bleiben oder mit einem Füllmaterial gefüllt werden wie zum Beispiel Dämmmaterialien.

Nach einer vorteilhaften Modifikation des Erfindungsgegenstandes sind innerhalb eines vom Grundrahmen umrandeten Rahmenbereichs wenigstens zwei erste Schienenführungen und wenigstens zwei zweite Schienenführungen vorhanden sind, wobei die wenigstens zwei ersten Schienenführungen einander zugeordnet und zueinander parallel ausgerichtet sind, und wobei die wenigstens zwei zweiten Schienenführungen einander zugeordnete und zueinander parallel ausgerichtet sind und wobei die zwei ersten Schienenführungen in einem Teilrahmen vorhanden sind und die zwei zweiten Schienenführungen in einem zweiten Teilrahmen eingerichtet sind.

Auf diese Weise kann innerhalb der von der Rahmenstruktur aufgespannten Fläche eine flexible Anpassung der Schienenführungen zur Anbringung einer oder mehrerer Sitzanordnungen in einem Fahrzeug an einer gewünschten Stelle im Fahrzeuginneren bereitgestellt werden.

Schließlich ist es auch von Vorteil, dass wenigstens ein Deckelement zur Bildung einer zwischen Schienenführungen vorhandenen flächigen Oberseite der Rahmenstruktur vorgesehen ist. Damit können die Bereiche der Vorrichtung bzw. der Rahmenstruktur, welche nicht die Oberseiten der Schienenführungen betreffen, flächig vorzugsweise vollständig mit einer geschlossenen und belastbaren Oberseite versehen werden. Beispielsweise können Deckelemente an der Rahmenstruktur vorzugsweise lösbar angebracht werden, beispielsweise durch Klemmen, Rasten, Anschrauben oder alternativ durch Anschweißen oder Ankleben.

Die Erfindung erstreckt sich auch auf ein Fahrzeug mit einem Fahrzeugboden, an dem eine wie oben beschriebene Vorrichtung vorhanden ist.

Damit lässt sich in dem Fahrzeug vorteilhaft zumindest eine Sitzanordnung oder ggf. mehrere Sitzanordnungen stabil und flexibel positionierbar anbringen.

### Figurenbeschreibung:

Weitere Merkmale und Vorteile der Erfindung sind anhand eines stark schematisiert dargestellten Ausführungsbeispiels der Erfindung näher erläutert.

Im Einzelnen zeigt:
- Figur 1: eine perspektivische Ansicht schräg von oben auf eine erfindungsgemäße Vorrichtung mit einer daran angeordneten Sitzanordnung und
- Figur 2: einen Teil einer Schienenführung perspektivisch schräg von vorne mit beidseitig vorhandenen Strebenelementen.

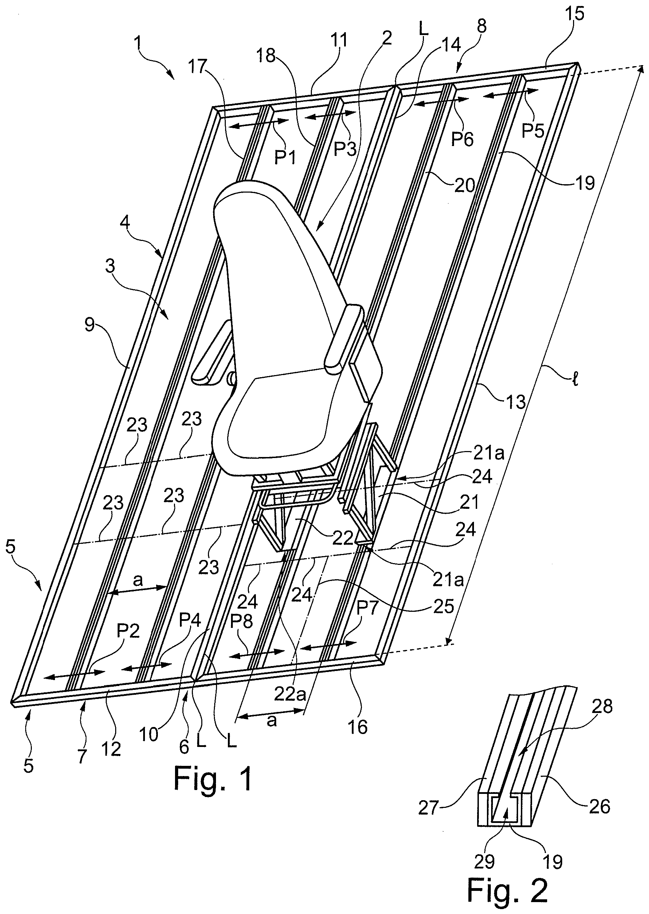

Figur 1 zeigt eine erfindungsgemäße Anbringvorrichtung 1 zur Anbringung einer Sitzanordnung 2 in einem Fahrzeug.

Die Anbringvorrichtung 1 ist als Fahrzeug-Einbaurahmen ausgebildet, die auf einem Fahrzeugboden 3 des Fahrzeugs aufliegend anbringbar ist. Die Anbringvorrichtung 1 umfasst eine Rahmenstruktur 4 mit winklig zueinander ausgerichteten Rahmenabschnitten 5.

Die Rahmenstruktur 4 weist einen Grundrahmen 6 auf, der aus zwei Teilrahmen 7 und 8 besteht. Die beiden Teilrahmen 7, 8 sind im Ausgangszustand voneinander getrennt und zum Grundrahmen 6 gemäß Figur 1 fertiggestellt vorhanden. Im Einbauzustand der Vorrichtung gemäß Figur 1 sind die beiden Teilrahmen 7 und 8 entlang einer Trennebene L miteinander in Anlage unlösbar oder lösbar verbunden. Der Grundrahmen 6 weist damit eine doppelte Grundfläche zur jeweiligen Grundfläche der Teilrahmen 7 bzw. 8 auf.

Der Grundrahmen 6 ist zur Fixierung an dem Fahrzeugboden 3 ausgebildet, was beispielsweise durch nicht dargestellte Befestigungsmittel wie z. B. Schraubmittel erfolgen kann.

Beide im Grundriss übereinstimmend rechteckige Teilrahmen 7 und 8 sind im dargestellten Ausführungsbeispiel identisch aufgebaut.

Der Teilrahmen 7 weist ein äußeres längsseitiges Außenprofil 9 und parallel ein gegenüberliegendes inneres längsseitiges Außenprofil 10 auf. Die beiden längsseitigen Außenprofile 9 und 10 sind durch zueinander parallele breitseitige Außenprofile 11 und 12 des Teilrahmens 7 miteinander verbunden. Die längsseitigen Außenprofile 9, 10 sind rechtwinklig zu den in der gleichen Ebene liegenden breitseitigen Außenprofilen 11 und 12 ausgerichtet.

Sämtliche Außenprofile 9-12 sind aus einem identischen Vierkant-Hohlprofilelement aus einem Stahlmaterial gebildet und miteinander in Eckbereichen des Teilrahmens 7 fest verschweißt.

Figur 1 zeigt den aus den beiden Teilrahmen 7 und 8 zusammengebauten Zustand des in sich starren Grundrahmens 6. Vor dem Einbau im Fahrzeug insbesondere für einen leichteren Transport sind die beiden Teilrahmen 7 und 8 in der Regel getrennt.

Im vorliegenden Ausführungsbeispiel beträgt die Länge der längsseitigen Außenprofile 9 und 10 etwa das drei- bis vierfache der Länge der breitseitigen Außenprofile 11 und 12.

Der Teilrahmen 8 weist entsprechend ein äußeres längsseitiges Außenprofil 13 und ein gegenüberliegendes inneres längsseitiges Außenprofil 14 und die breitseitigen Außenprofile 15 und 16 auf. Die längsseitigen Außenprofile 13 und 14, die parallel zu den Außenprofilen 9 und 10 sind, stehen in der gleichen Ebene rechtwinklig zu den breitseitigen Außenprofilen 15 und 16.

Die Außenprofile 12 und 16 und die Außenprofile 11 und 15 liegen räumlich mit ihrer Längsachse auf einer gemeinsamen Raumlinie.

Die jeweils inneren längsseitigen Außenprofile 10 und 14 der beiden Teilrahmen 7 und 8 sind an schmalen flachen Außenseiten aneinander in Anlage und über die gesamte Länge der Außenprofile 10 und 14 miteinander verbunden z. B. über mehrere Schweißpunkte verschweißt. Damit ist der Grundrahmen 6 starr aus den beiden Teilrahmen 7 und 8 gebildet. Die von den Außenprofilen 9-12 aufgespannte freie Ebene des Teilrahmens 7 und die von den Außenprofilen 13-16 aufgespannte freie Ebene des Teilrahmens 8 bilden jeweils einen Freiraum zur Unterbringung von Schienenführungen und ggf. von Strebenelementen und/oder Versteifungselementen der Rahmenstruktur 4.

Der Grundrahmen 6 weist die Außenseiten gemäß der Außenprofile 9, 10, 16, 13, 15 und 11 auf.

Innerhalb der Ebene des Teilrahmens 7 ist parallel zu den längsseitigen Außenprofilen 9 und 10 eine äußere erste Schienenführung 17 und eine innere zweite Schienenführung 18 vorhanden. Die Schienenführungen 17 und 18 sind mit ihren jeweiligen stirnseitigen Enden an den gegenüberliegenden breitseitigen Außenprofilen 11, 12 verschieblich aufgenommen, um den Abstand a zueinander und die Position innerhalb des Teilrahmens 7 ein- bzw. verstellen zu können. Hierzu sind die Schienenführungen 17 und 18 gemäß der Doppelpfeile P1, P2 bzw. P3, P4 relativ und entlang der Außenprofile 11 und 12 verschieblich.

Entsprechend sind bei dem Teilrahmen 8 zwei zu den Außenprofilen 13, 14 parallele Schienenführungen 19, 20 innerhalb des Teilrahmens 8 vorhanden und entlang der Außenprofile 15 und 16 verschieblich gemäß der Doppelpfeile P5, P7 bzw. P6, P8 geführt am Teilrahmen 8 aufgenommen.

Die aus einem Aluminiumwerkstoff bestehenden Schienenführungen 17-20 sind untereinander identisch.

Verstellmittel zur Verstellung der Schienenführungen 17-20 an den Außenprofilen 11, 12, 15, 16 sind nicht näher dargestellt. Beispielsweise weisen die Außenprofile 11, 12, 15, 16 jeweils auf einer nach innen gerichteten Seite durchgehende Linienführungen bzw. Schlitze auf, in welche ein jeweiliges Eingreifelement am jeweiligen Ende der Schienenführungen 17-20 eingreift und gehalten bzw. darin verschieblich ist.

Außerdem sind lösbar feststellbare Arretiermittel zur Fixierung des jeweiligen Endes der Schienenführungen 17-20 an einer betreffenden Stelle der Außenprofile 11, 12, 15, 16 nicht gezeigt.

An den Schienenführungen 19, 20 der Anbringvorrichtung 1 ist die Sitzanordnung 2 über unterseitig an der Sitzanordnung 2 vorbereitet vorgesehene Verbindungselemente 21, 22 befestigt. Die Streifenförmige Verbindungselemente 21, 22 weisen jeweils zwei beabstandete unterseitig abstehende Schlitten 21a bzw. 22a auf, die in die Schienenführungen 19, 20 eingreifen.

Die möglichen Positionen der Schienenführungen 19 und 20 im Grundrahmen 6 und ein Abstand a zwischen den Schienenführungen 19 und 20 ist mittels der Verschiebbarkeit der Schienenführungen 19 und 20 gemäß P5 bis P7 einstellbar. Die Sitzanordnung 2 kann je nach Einstellposition der Schienenführungen 19, 20 im Teilrahmen 8 über die Länge der Erstreckung der breitseitigen Außenprofile 15, 16 positioniert werden. Zusätzlich ist die Sitzanordnung 2 über die vier Schlitten 21a, 22a verschieblich entlang der Schienenführungen 19 und 20 über die Länge ℓ in eine gewünschte Position verschiebbar und über entsprechende Fixiermittel zwischen den Schlitten 21a, 22a und den Schienenführungen 19, 20 fixierbar an den Schienenführungen 19 und 20. Die Verbindungselemente 21, 22 greifen hierfür mit unterseitig vorhandenen Schlitten 21a, 22a in ein Innen- bzw. Hohlvolumen 29 (s. Figur 2) der Schienenführungen 19 und 20 ein, womit eine Haltefunktion und Schiebefunktion zwischen den Verbindungselemente 21, 22 und den Schienenführungen 19 und 20 realisiert ist. Die Verbindungselemente 21, 22 erlauben mit den Fixiermitteln die Fixierung der Sitzanordnung 2 an einer gewählten Position entlang der Schienenführungen 19, 20.

Weitere parallel und/oder quer zu den Schienenführungen 17 bis 20 optional innerhalb der Teilrahmen 7, 8 vorhandene Rahmenabschnitte sind nahezu beliebig möglich, wobei einzelne beispielhaft und strichpunktiert als Rahmenabschnitte 23-25 angedeutet sind. Die Rahmenabschnitte 23 bis 25 dienen unter anderem als die Rahmenstruktur 4 versteifende Elemente und/oder die Rahmenabschnitte 23 bis 25 können als Schienenführungen entsprechend den Schienenführungen 17-20 ausgestaltet sein, um die Sitzanordnung 2 bei vorgegebenen Schienenführungen 17-20 mit den quer gerichteten Rahmenabschnitten 23, 24 zusätzlich quer zu den Schienenführungen 17-20 versetzen und fixieren zu können. Dazu muss eine Übergang zwischen dem Hohlvolumen der Schienenführungen 17-20 und dem Hohlvolumen der angrenzenden Rahmenabschnitte 23, 24 möglich sein, damit die Verbindungselemente 21, 22 verschieblich von den Schienenführungen 17-20 in die Rahmenabschnitte 23, 24 versetzbar sind. Eine Verschiebung der Rahmenabschnitte 23 bis 25 entlang der Schienenführungen 17-20 bzw. der Außenprofile 9-16 ist wahlweise einrichtbar.

Figur 2 zeigt einen Endabschnitt der Schienenführungen 17-20, wobei beispielhaft die Schienenführung 19 aus Figur 1 gezeigt ist. Im Unterschied zu Figur 1 betrifft Figur 2 eine beispielhafte bzw. vorteilhafte Variante, die sich von Figur 1 dadurch unterscheidet, dass an der Schienenführung 19 beidseitig profilartige Strebenelemente 26, 27 zum Beispiel aus Stahl oder Aluminium vorhanden sind, die zur Stabilisierung der Anordnung gegen Verformung, Verbiegung bzw. Verwindung insbesondere der Schieneneinrichtung 19 dienen. Die Strebenelemente 26, 27 sind vorzugsweise über Abschnitte oder punktuell im Andrückkontakt mit der Schieneneinrichtung 19 oder mit dieser fest verbunden, zum Beispiel angeschraubt oder angeschweißt.

Die Schieneneinrichtung 19 ist durch ein vierkantförmiges Hohlprofil mit einem oberseitig bzw. zur Sitzanordnung 2 gerichteten Seite in Längsrichtung der Schieneneinrichtung 19 durchgehenden Schlitz 28 und einem inneren Hohlvolumen 29 ausgebildet ist. In das Hohlvolumen 29 greifen die Schlitten 21a, 22a der Verbindungselemente 21, 22 ein.

In Figur 2 nicht dargestellt sind Angreif-und Feststellmittel am stirnseitigen Ende der Schienenführung 19, welche am Außenprofil 16 innenseitig zur Lagerung, zur Verschiebung gemäß des Doppelpfeils P7 und zur Feststellung angreifen.

### Bezugszeichenliste:

- 1: Anbringvorrichtung
- 2: Sitzanordnung
- 3: Fahrzeugboden
- 4: Rahmenstruktur
- 5: Rahmenabschnitt
- 6: Grundrahmen
- 7: Teilrahmen
- 8: Teilrahmen
- 9: Außenprofil
- 10: Außenprofil
- 11: Außenprofil
- 12: Außenprofil
- 13: Außenprofil
- 14: Außenprofil
- 15: Außenprofil
- 16: Außenprofil
- 17: Schienenführung
- 18: Schienenführung
- 19: Schienenführung
- 20: Schienenführung
- 21: Verbindungselement
- 21a: Schlitten
- 22: Verbindungselement
- 22a: Schlitten
- 23: Rahmenabschnitt
- 24: Rahmenabschnitt
- 25: Rahmenabschnitt
- 26: Strebenelement
- 27: Strebenelement
- 28: Schlitz
- 29: Hohlvolumen

## Patentansprüche

1. Vorrichtung (1) zur Anbringung einer Sitzanordnung (2) in einem Fahrzeug, wobei die Vorrichtung (1) eine oberseitig an einem Fahrzeugboden (3) einbaubare Rahmenstruktur (4) mit winklig zueinander ausgerichteten Rahmenabschnitten (5) aufweist, wobei die Rahmenstruktur (4) einen Grundrahmen (6) zur Fixierung der Rahmenstruktur (4) an dem Fahrzeugboden (3) umfasst, wobei der Grundrahmen (6) mit Befestigungsmitteln derart vorbereitet ausgebildet ist, dass der Grundrahmen (6) an im Fahrzeug vorgegebenen Befestigungspunkten befestigbar ist, **dadurch gekennzeichnet, dass** der Grundrahmen (6) wenigstens zwei Teilrahmen (7, 8) aufweist, wobei ein Teilrahmen (7, 8) einen längsseitigen Außenrand (9, 10; 13, 14) und einen breitseitigen Außenrand (11, 12; 15, 16) aufweist, und die Teilrahmen (7, 8) derart abgestimmt sind, dass ein Außenrand (10) eines Teilrahmens (7) an einem Außenrand (14) eines anderen Teilrahmens (8) angrenzt und die beiden aneinander angrenzenden Außenränder (10, 14) miteinander verbunden sind, um den Grundrahmen (6) im Einbauzustand zu bilden.

2. Vorrichtung nach Anspruch 1, **dadurch gekennzeichnet, dass** innerhalb eines vom Grundrahmen (6) umrandeten Rahmenbereichs zwei oder mehr als zwei zueinander parallel ausgerichtete Schienenführungen (17-20) aufgenommen sind, welche zur Befestigung einer Sitzanordnung (2) an wenigstens zwei Schienenführungen (17-20) dienen.

3. Vorrichtung nach Anspruch 2, **dadurch gekennzeichnet, dass** zumindest eine Schienenführung (17-20) zu einer weiteren Schienenführung (17-20) am Grundrahmen (6) versetzbar gelagert ist, um einen Abstand der Schienenführungen (17-20) zueinander veränderbar vorzugeben.

4. Vorrichtung (1) nach einem der vorhergehenden Ansprüche 2 bis 3, **dadurch gekennzeichnet, dass** die Schienenführungen (17-20) ausgebildet sind, dass die Sitzanordnung (2) in Längsrichtung der jeweiligen Schienenführung (17-20) stufenlos verstellbar und an unterschiedlichen Abschnitten der Schienenführung (17-20) befestigbar ist.

5. Vorrichtung nach einem der vorhergehenden Ansprüche 2 bis 4, **dadurch gekennzeichnet, dass** in unmittelbarer Nähe einer Schienenführung (19) ein Strebenelement (26, 27) vorhanden ist, das entlang der Schienenführung (19) verläuft, wobei ein Strebenelement (26, 27) an der Rahmenstruktur (4) befestigt ist.

6. Vorrichtung nach einem der vorhergehenden Ansprüche 2 bis 5, **dadurch gekennzeichnet, dass** eine Schienenführung (23, 24) winklig zu einer anderen Schienenführung (17-20, 25) ausgerichtet ist.

7. Vorrichtung nach einem der vorhergehenden Ansprüche 2 bis 6, **dadurch gekennzeichnet, dass** rechtwinklig zueinander ausgerichtete Schienenführungen (23-25, 17-20) vorhanden sind.

8. Vorrichtung nach einem der vorhergehenden Ansprüche 2 bis 7, **dadurch gekennzeichnet, dass** die Schienenführungen (17-20) an einer Oberseite der Rahmenstruktur (4) sichtbar vorhanden ist.

9. Vorrichtung nach einem der vorhergehenden Ansprüche, **dadurch gekennzeichnet, dass** der Grundrahmen (6) aus einem Stahlwerkstoff gebildet ist.

10. Vorrichtung nach einem der vorhergehenden Ansprüche, **dadurch gekennzeichnet, dass** die Rahmenstruktur (4) ein Hohlprofil umfasst.

11. Vorrichtung nach einem der vorhergehenden Ansprüche 2-8, **dadurch gekennzeichnet, dass** wenigstens ein Deckelement zur Bildung einer zwischen Schienenführungen (17-20) vorhandenen flächigen Oberseite der Rahmenstruktur (4) vorgesehen ist.

12. Fahrzeug mit einem Fahrzeugboden (3), wobei eine Vorrichtung (1) nach einem der vorherigen Ansprüche 1 bis 11 vorhanden ist.

## Claims

1. Apparatus (1) for installing a seat arrangement (2) in a vehicle, wherein the apparatus (1) has a frame structure (4), able to be fitted on the top side of a vehicle floor (3), having frame portions (5) that are oriented at an angle to one another, wherein the frame structure (4) comprises a base frame (6) for fixing the frame structure (4) to the vehicle floor (3), wherein the base frame (6) is configured in a manner prepared with fastening means such that the base frame (6) is able to be fastened at fastening points predefined in the vehicle, **characterized in that** the base frame (6) has at least two part-frames (7, 8), wherein a part frame (7, 8) has a long-side outer edge (9, 10; 13, 14) and a broadside outer edge (11, 12; 15, 16) and the part-frames (7, 8) are matched such that an outer edge (10) of one part-frame (7) adjoins an outer edge (14) of another part-frame (8) and the two mutually adjoining outer edges (10, 14) are connected together in order to form the base frame (6) in the fitted state.

2. Apparatus according to Claim 1, **characterized in that** two or more rail guides (17-20) in the form of two that are oriented parallel to one another are received within a frame region bordered by the base frame (6), these serving for fastening a seat arrangement (2) to at least two rail guides (17-20).

3. Apparatus according to Claim 2, **characterized in that** at least one rail guide (17-20) is mounted so as to be displaceable with respect to a further rail guide (17-20) on the base frame (6), in order to predefine a spacing of the rail guides (17-20) from one another.

4. Apparatus (1) according to either of the preceding Claims 2 and 3, **characterized in that** the rail guides (17-20) are configured such that the seat arrangement (2) is continuously adjustable in the longitudinal direction of the respective rail guide (17-20) and is able to be fastened to different portions of the rail guide (17-20).

5. Apparatus according to one of the preceding Claims 2 to 4, **characterized in that**, in the immediate vicinity of one rail guide (19), a strut element (26, 27) that extends along the rail guide (19) is present, wherein a strut element (26, 27) is fastened to the frame structure (4) .

6. Apparatus according to one of the preceding Claims 2 to 5, **characterized in that** one rail guide (23, 24) is oriented at an angle to another rail guide (17-20, 25).

7. Apparatus according to one of the preceding Claims 2 to 6, **characterized in that** rail guides (23-25, 17-20) that are oriented at right angles to one another are present.

8. Apparatus according to one of the preceding Claims 2 to 7, **characterized in that** the rail guides (17-20) are visibly present on a top side of the frame structure (4).

9. Apparatus according to one of the preceding claims, **characterized in that** the base frame (6) is formed from a steel material.

10. Apparatus according to one of the preceding claims, **characterized in that** the frame structure (4) comprises a hollow profile.

11. Apparatus according to one of the preceding Claims 2-8, **characterized in that** at least one cover element for forming a flat top side, present between rail guides (17-20), of the frame structure (4) is provided.

12. Vehicle having a vehicle floor (3), wherein an apparatus (1) according to one of the preceding Claims 1 to 11 is present.

## Revendications

1. Dispositif (1) de fixation d'un ensemble de siège (2) dans un véhicule, le dispositif (1) comportant une structure de cadre (4) qui peut être installée du côté supérieur sur un plancher de véhicule (3) et qui comporte des portions de cadre (5) orientées angulairement les unes par rapport aux autres, la structure de cadre (4) comprenant un cadre de base (6) destiné à fixer la structure de cadre (4) au plancher de véhicule (3), le cadre de base (6) étant conçu avec des moyens de fixation en étant préparé de manière à ce que le cadre de base (6) puisse être fixé à des points de fixation spécifiés dans le véhicule, **caractérisé en ce que** le cadre de base (6) comporte au moins deux sous-cadres (7, 8), un sous-cadre (7, 8) comportant un bord extérieur côté longueur (9, 10 ; 13, 14) et un bord extérieur côté largeur (11, 12 ; 15, 16), et les sous-cadres (7, 8) étant adaptés de telle sorte qu'un bord extérieur (10) d'un sous-cadre (7) soit adjacent à un bord extérieur (14) d'un autre sous-cadre (8) et les deux bords extérieurs (10, 14) adjacents l'un à l'autre soient reliés entre eux pour former le cadre de base (6) à l'état installé.

2. Dispositif selon la revendication 1, **caractérisé en ce qu'**à l'intérieur d'une zone de cadre délimitée par le cadre de base (6) sont logés deux ou plus de deux rails de guidage (17-20) qui sont orientés parallèlement entre eux et qui servent à la fixation d'un ensemble de sièges (2) à au moins deux rails de guidage (17-20).

3. Dispositif selon la revendication 2, **caractérisé en ce qu'**au moins un rail de guidage (17-20) est monté de manière déplaçable par rapport à un autre rail de guidage (17-20) sur le cadre de base (6) afin de spécifier de manière modifiable une distance entre les rail de guidage (17-20).

4. Dispositif (1) selon l'une des revendications précédentes 2 à 3, **caractérisé en ce que** les rails de guidage (17-20) sont conçus de manière que l'ensemble de sièges (2) puisse être réglé en continu dans la direction longitudinale du rail de guidage respectif (17-20) et puisse être fixé à différentes portions du rail de guidage (17-20).

5. Dispositif selon l'une des revendications précédentes 2 à 4, **caractérisé en ce qu'**un élément formant entretoise (26, 27), qui s'étend le long du rail de guidage (19), est situé à proximité immédiate d'un rail de guidage (19), un élément formant entretoise (26, 27) étant fixé à la structure de cadre (4) .

6. Dispositif selon l'une des revendications précédentes 2 à 5, **caractérisé en ce qu'**un rail de guidage (23, 24) est orienté angulairement par rapport à un autre rail de guidage (17-20, 25).

7. Dispositif selon l'une des revendications précédentes 2 à 6, **caractérisé en ce que** des rails de guidage (23-25, 17-20) sont prévus qui sont orientés perpendiculairement entre eux.

8. Dispositif selon l'une des revendications précédentes 2 à 7, **caractérisé en ce que** les rails de guidage (17-20) sont situés de manière visible sur un côté supérieur de la structure de cadre (4).

9. Dispositif selon l'une des revendications précédentes, **caractérisé en ce que** le cadre de base (6) est formé à partir d'un acier.

10. Dispositif selon l'une des revendications précédentes, **caractérisé en ce que** la structure de cadre (4) comprend un profilé creux.

11. Dispositif selon l'une des revendications précédentes 2 à 8, **caractérisé en ce qu'**au moins un élément de recouvrement est prévu pour former un côté supérieur, sensiblement bidimensionnel, de la structure de cadre (4) qui est situé entre des rails de guidage (17-20).

12. Véhicule pourvu d'un plancher de véhicule (3), un dispositif (1) selon l'une des revendications précédentes 1 à 11 étant présent.
